# EUROPEAN PATENT SPECIFICATION

(11) **EP 3 840 524 B1**
(45) Date of publication and mention of the grant of the patent: **08.09.2021**
(21) Application number: 19216463.0
(22) Date of filing: 16.12.2019
(51) Int. Cl.: H04W 76/38, H04W 52/02

(54) **METHOD FOR PERFORMANCE IN CONNECTION WITH PERFORMING A POSITIONING OR LOCATION PROCEDURE OF A USER EQUIPMENT IN A MOBILE COMMUNICATION NETWORK, MOBILE COMMUNICATION NETWORK, SPECIFIC NETWORK NODE, COMPUTER PROGRAM AND COMPUTER PROGRAM PRODUCT**
LEISTUNGSVERFAHREN IN VERBINDUNG MIT DER DURCHFÜHRUNG EINER POSITIONIERUNGS- ODER LOKALISIERUNGSPROZEDUR EINER BENUTZERAUSRÜSTUNG IN EINEM MOBILKOMMUNIKATIONSNETZ, MOBILKOMMUNIKATIONSNETZ, SPEZIFISCHER NETZKNOTEN, COMPUTERPROGRAMM UND COMPUTERPROGRAMMPRODUKT
PROCÉDÉ DE PERFORMANCE EN RELATION AVEC LA RÉALISATION D'UNE PROCÉDURE DE POSITIONNEMENT OU DE LOCALISATION D'UN ÉQUIPEMENT UTILISATEUR DANS UN RÉSEAU DE COMMUNICATION MOBILE, RÉSEAU DE COMMUNICATION MOBILE, NOEUD DE RÉSEAU SPÉCIFIQUE, PROGRAMME D'ORDINATEUR ET PRODUIT-PROGRAMME D'ORDINATEUR

(43) Date of publication of application: 23.06.2021
(73) Proprietor: Deutsche Telekom AG, 53113 Bonn (DE)
(72) Inventor: AMRAUE, Yassine, 53844 Troisdorf (DE); KADELKA, Arndt, Dr., 50933 Cologne (DE)
(74) Representative: Schwöbel, Thilo K.

(56) References cited:
- WO-A1-2019/219619
- US-A1- 2009 318 199
- US-A1- 2015 055 573
- US-A1- 2019 349 881
- "3rd Generation Partnership Project; Technical Specification Group Services and System Aspects; Study on Enhancement to the 5GC LoCation Services (Release 16)", 3GPP STANDARD; TECHNICAL REPORT; 3GPP TR 23.731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1-170, XP051591219, [retrieved on 2018-12-19]

## Description

### BACKGROUND

The present invention relates to a method for performance in connection with performing a positioning or location procedure of a user equipment in a mobile communication network, wherein in case of inactivity- after a previous data transmission event between the user equipment and the specific base station entity during a period of time longer than or corresponding to an inactivity timer of the specific base station entity - of the user equipment, detected by the specific base station entity, the specific base station entity releases the connection by means of requesting the user equipment to change from the first connection state to the second connection state.

Furthermore, the present invention relates to a corresponding mobile communication network, or a system,for performance in connection with performing a positioning or location procedure of a user equipment in a mobile communication network, wherein in case of inactivity- after a previous data transmission event between the user equipment and the specific base station entity during a period of time longer than or corresponding to an inactivity timer of the specific base station entity - of the user equipment, detected by the specific base station entity, the specific base station entity releases the connection by means of requesting the user equipment to change from the first connection state to the second connection state.

Additionally, the present invention relates to a corresponding specific network node Specific network node of a mobile communication network for performance in connection with performing a positioning or location procedure of a user equipment in a mobile communication network, wherein in case of inactivity- after a previous data transmission event between the user equipment and the specific base station entity during a period of time longer than or corresponding to an inactivity timer of the specific base station entity - of the user equipment, detected by the specific base station entity, the specific base station entity releases the connection by means of requesting the user equipment to change from the first connection state to the second connection state.

Furthermore, the present invention relates to a corresponding computer program and computer program product for performance in connection with performing a positioning or location procedure of a user equipment in a mobile communication network to perform the inventive method.

The internet-of-things loT and/or machine-to-machine (M2M) communication refers to systems typically comprising a plurality of devices or communication devices - so-called internet-of-things devices or internet-of-things communication devices - having typically network connectivity enabling the internet-of-things devices to collect, transmit, receive and/or exchange data. The data are able to be used either in a central or centralized entity or server node, or transmitted, from such centralized entity or server node, towards client devices, e.g. as part of a communication service (internet-of-things service) associated to the internet-of-things system.

Especially with internet-of-things devices, there is a need to obtain or calculate the geographical position or location of an internet-of-things device. Support of positioning services in mobile communication networks was initially specified by 3GPP to fulfill the US FCC911 mandate in order to serve network-based localization of users in case of emergency calls, applying legacy mobile phones or smart phones. Later on, the device category of machine-type devices (or machine type communication devices) serves the increasing demand for internet-of-things use cases. Many of these use cases request positioning services in addition to basic mobile connectivity.

Especially for internet-of-things devices, or internet-of-things use cases, energy efficiency is an important factor. In contrast to current smart phones, machine-type devices shall last for months or even years with one battery without recharging. Thereby, the data processing amount and communication requirements need to be as efficient as possible. In many use cases, location information is derived from a second radio device, like a GPS module. A mobile network-based positioning service can step in in many of those use cases serving connectivity and positioning service by a single radio unit. This allows to reduce cost and to reduce power consumption.

Network-based positioning service for machine-type devices can build on the existing mechanisms already defined for localization of classical mobile network users. However, the mechanisms defined for use cases like localization in an emergency cases are designed to serve rather rare events. Compared to this, internet-of-things use cases need to serve positioning requests more often or on a periodic basis.

WO 2019/219619 A1 discloses a method for providing a User Plane Function (UPF) for supporting a Network loT Messaging Function (NIMF). US 2015/055573 A1 discloses a method for controlling connectivity states. US 2009/318199 A1 relates to techniques to enable detection of a condition or conditions to accomplish an early release of wireless network resources by a mobile communication device. US2019/349881 A1 and 3GPP TR 23.731 V16.1.0 also are related to location services.

### SUMMARY

An object of the present invention is to provide a method for performance in connection with performing a positioning or location procedure of a user equipment in a mobile communication network such that it is possible to reduce the battery drain of the user equipment in connection with performing a positioning or location procedure.

The object of the present invention is achieved by a method according to claim 1.

According to the present invention, it is proposed that a user equipment, especially an internet-of-things device or a machine type communication device, is able to reduce battery drain in a flexible manner, namely by means of releasing a radio communication connection with the serving base station entity earlier in situations this is more advantageous, and to avoid an early release the connection in situations this is more advantageous.

According to the present invention, the method is related to performing a positioning and/or location procedure with respect to the user equipment (especially internet-of-things device or machine type communication device). The mobile communication network comprises an access network, and the access network comprises a plurality of base station entities, each having a radio coverage area. The user equipment (especially internet-of-things device or machine type communication device) is assumed to be located in the radio coverage area of a specific base station entity (of the plurality of base station entities of the mobile communication network), and the user equipment is configured to be able to be in different connection states. The different connection states, especially include a first connection state, and at least a second connection state. The first connection state corresponds to a radio bearer or RRC context being established - in view of transmitting data to the user equipment (in downlink direction) or from the user equipment (in uplink direction towards the mobile communication network - between the user equipment on the one hand, and the specific base station entity on the other hand. The second connection state corresponds to a situation where the user equipment lacks an active or activated radio bearer or RRC context. In case of inactivity - typically after a previous data transmission event between the user equipment and the specific base station entity during a period of time longer than or corresponding to an inactivity timer of the specific base station entity - of the user equipment, detected by the specific base station entity, the specific base station entity releases the connection by means of requesting the user equipment to change from the first connection state to the second connection state. However, in the connected state (or first connection state), the user equipment consumes much more energy, even when no packets are transmitted or received.

The mobile communication network comprises or is connected to a location server entity, wherein the location server entity is involved in performing a positioning and/or location procedure in order to determine the position and/or location of the user equipment. According to the present invention, the location server entity and/or a specific network node of the mobile communication network transmits an early release indication to the specific base station entity (serving the user equipment). According to the present invention, the early release indication indicate (especially to the specific base station entity) whether or not - upon or after the termination of the positioning and/or location procedure - an early release of the connection of the user equipment, whereby the user equipment changes from the first connection state to the second connection state, is preferred.

The method according to the present invention comprises the steps of:
-- in a first step, the positioning and/or location procedure is performed, and
-- in a second step, subsequent to the first step,
   -- the specific base station entity releases the connection of the user equipment by allowing or requesting a change of the user equipment from the first connection state to the second connection state, in case that prior to performing the positioning and/or location procedure, both the user equipment was in the second connection state and the early release indication indicates that an early release of the connection of the user equipment is preferred, and
   -- the specific base station entity maintains the connection of the user equipment by requesting the user equipment to stay in the first connection state, in case that upon or after performing the positioning and/or location procedure, the inactivity timer of the specific base station entity - after a previous data transmission event between the user equipment and the specific base station entity - has not elapsed, or in case that the early release indication indicates that no early release of the connection of the user equipment is preferred.

Thereby, it is advantageously possible to reduce the battery drain of the user equipment (especially an internet-of-things device or a machine type communication device) as the time period of the user equipment being in the first (connected) connection state can be reduced, and additionally, in case that a further positioning and/or location procedure is expected to occur, it is possible to avoid the premature release of the connection of the user equipment, and, hence, avoid that the connection is released (i.e. the user equipment passes from the first connection state to the second connection (not connected, especially idle state)) only to be reestablished shortly after having been released. Thereby, it is not only possible to reduce battery drain of the user equipment but also reduce signaling overhead (and, hence, consumption of data transmission resource between the specific base station entity and the user equipment) of the base station entity, and, hence, is advantageous for the base station entity. According to the present invention and especially in case that the positioning and/or location procedure leads to (or is the reason for) the user equipment gaining (or acquiring) the first connection state (i.e. having an RRC context established) - that means that, prior to the positioning and/or location procedure, the user equipment is not in the first connection state -, it is advantageously possible that this connection is more or less immediately released (in case that this is the preferred outcome, and is communicated by means of the early release indication) after this positioning and/or location procedure is terminated, hence reducing battery drain within the user equipment. On the other hand, in case that the positioning and/or location procedure occurs or is conducted during the time interval (after a previous data transmission event between the user equipment and the specific base station entity) of the inactivity timer being activated (or counting backwards or being decremented) - that means that, prior to the positioning and/or location procedure, the user equipment is in the first connection state -, it is advantageously possible that the release of this connection is deferred until the inactivity timer has completely elapsed.

In present-day conventionally known mobile communication networks, solutions are provided to gather positioning information of user equipments either with using satellite navigation, or without necessarily using satellite navigation, such mobile communication networks allow to derive positioning information of user equipments using alternative sources of information, e.g. by analysing measurements carried out by network elements (of the mobile communication network), e.g. by base stations such as NB (NodeB) or eNB (enhanced NodeB). Those mobile communication networks usually comprise a location server that determines positioning information regarding the user equipment based on specific data provided by the user equipment, especially measurement data. The location server or location server entity typically often knows about when a further positioning and/or location procedure regarding the user equipment has or needs to be performed. Alternatively, a specific network node of the mobile communication network is involved in communicating with the serving (or specific) base station entity of the user equipment regarding positioning and/or location procedures. Hence, it is possible for the location server entity and/or for the specific network node of the mobile communication network to indicate (especially to the base station entity) whether - in a specific situation, or depending on such a specific situation - it either seems more beneficial, regarding especially the battery drain of the user equipment, not to wait for the inactivity timer to have elapsed, but to release the connection after having performed or terminated the positioning and/or location procedure, or whether it seems more beneficial, regarding especially both the battery drain of the user equipment as well as the signalization overhead, not to release (or shut down) the connection after having performed or terminated the positioning and/or location procedure. According to the present invention, this information is transmitted to, especially the base station entity serving the user equipment, by means of transmitting the early release indication to the specific base station entity.

According to the present invention, it is advantageously possible and preferred that the positioning and/or location procedure comprises, in a first sub-step, a location request message, and in a second sub-step, a location answer message, the location request message being transmitted, by the specific base station entity, to the user equipment, and the location answer message being transmitted, by the user equipment to the specific base station entity and/or to the location server entity and/or to the specific network node, wherein between the first sub-step and the second sub-step, during a third sub-step, the user equipment determines positioning and/or location-related data to be sent, as part of the location answer message to the specific base station entity and/or to the location server entity and/or to the specific network node.

By means of performing the positioning and/or location procedure such that it comprises the first sub-step, the second sub-step as well as the third sub-step, it is advantageously possible to easily and flexibly perform the positioning and/or location procedure, depending on the respective conditions or the respective situation of the user equipment, or of the required positioning accuracy and the like.

Furthermore, and according to an alternative embodiment of the present invention, it is possible and preferred that -in the second step - the specific base station entity releases the connection of the user equipment by allowing or requesting a change of the user equipment from the first connection state to the second connection state, in case all of the following conditions are met:
-- prior to performing the positioning and/or location procedure, the inactivity timer of the specific base station entity - after a previous data transmission event between the user equipment and the specific base station entity - has not elapsed, resulting in the user equipment being in the first connection state prior to performing the positioning and/or location procedure, and
-- upon or after performing the positioning and/or location procedure, the inactivity timer of the specific base station entity - after a previous data transmission event between the user equipment and the specific base station entity - has elapsed, and
-- the early release indication indicates that an early release of the connection of the user equipment is preferred.

Thereby, it is advantageously possible to also realize an early release of the connection of the user equipment (in case this is preferred and indicated by means of the early release indication transmitted to the base station entity), in case that the positioning and/or location procedure occurs at the end the time window of the inactivity timer, i.e. the positioning and/or location procedure is started while the inactivity timer (after a previous data transmission event between the user equipment and the specific base station entity) has not yet elapsed, but the inactivity timer elapses during performing the positioning and/or location procedure. If in this case the early release indication indicates that an early release of the connection of the user equipment is preferred, the connection can be released earlier, thus reducing the battery drain of the user equipment.

According to a further preferred embodiment of the present invention, -in the second step - the specific base station entity maintains the connection of the user equipment until the inactivity timer of the specific base station entity - after the previous data transmission event between the user equipment and the specific base station entity - has elapsed.

Thereby, it is advantageously possible that there is no interference of performing - while indicating that an early release is preferred - a positioning and/or location procedure during the time interval of the inactivity timer (being started after a previous data transmission event between the user equipment and the specific base station entity) counting back (or being decremented).

Furthermore, it is advantageously possible and preferred according to the present invention that - in the second step - the specific base station entity maintains the connection of the user equipment until the inactivity timer of the specific base station entity - after performing the positioning and/or location procedure - has elapsed.

Thereby, it is advantageously possible that - triggered by performing the positioning and/or location procedure - the inactivity timer is started (or set to its initial value) anew after the positioning and/or location procedure (in case that the positioning and/or location procedure has been initiated during the time interval of the inactivity timer after a previous data transmission event between the user equipment and the specific base station entity).

According to a further preferred embodiment of the present invention, the early release indication indicates that an early release of the connection of the user equipment is not preferred in case that a further positioning and/or location procedure is scheduled to occur within a short period of time after the positioning and/or location procedure.

Thereby, it is advantageously possible to avoid to release of the connection of the user equipment, in case a subsequent positioning and/or location procedure is imminent within a short period of time, typically on the time scale of the inactivity timer interval or, even, within a period of time shorter than the inactivity timer interval.

According to a further preferred embodiment of the present invention, the second connection state corresponds to an idle mode of the user equipment according to the LTE standard, long term evolution standard, or according to the 5G/NR standard, fifth generation/new radio standard, and/or to an inactive mode of the user equipment according to the 5G/NR standard, fifth generation/new radio standard.

According to a further preferred embodiment of the present invention, the user equipment is an internet-of-things device and/or a machine type communication device.

Additionally, the invention relates to and the object of the present invention is achieved by a mobile communication network according to claim 9.

By means of the inventive mobile communication network, it is thereby advantageously possible to reduce the battery drain of the user equipment in many case, while nevertheless being flexible to allow a deferred connection release if this is more appropriate.

Additionally, the object of the present invention is achieved by and the invention relates to a specific network node according to claim 10.

By means of the inventive specific network node of a mobile communication network, it is thereby advantageously possible to reduce the battery drain of the user equipment in many case, while nevertheless being flexible to allow a deferred connection release if this is more appropriate.

Additionally, the present invention relates to a computer program comprising a computer readable program code which, when executed on a computer or on a base station entity or on a specific network node of a mobile communication network or on a location server entity or in part on a base station entity and/or in part on a specific network node of a mobile communication network and/or in part or on a location server entity, causes the base station entity and/or the specific network node of the mobile communication network and/or the location server entity to perform a method as described before.

Furthermore, the present invention relates to a computer program product for performance in connection with performing a positioning or location procedure of a user equipment in a mobile communication network, the computer program product comprising a computer program stored on a storage medium, the computer program comprising program code which, when executed on a computer or on a base station entity or on a specific network node of a mobile communication network or on a location server entity or in part on a base station entity and/or in part on a specific network node of a mobile communication network and/or in part or on a location server entity, causes the base station entity and/or the specific network node of the mobile communication network and/or the location server entity to perform a method as described before.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an inventive mobile communication network according to the present invention.
Figures 2 and 3 schematically illustrate communication diagrams between the user equipment, the mobile communication network or the specific network node, and the location server entity, showing exemplary situations of an early release of the connection of the user equipment.
Figure 4 schematically illustrates communication diagrams between the user equipment, the mobile communication network or the specific network node, and the location server entity, showing an exemplary situation of a deferred release of the connection of the user equipment.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

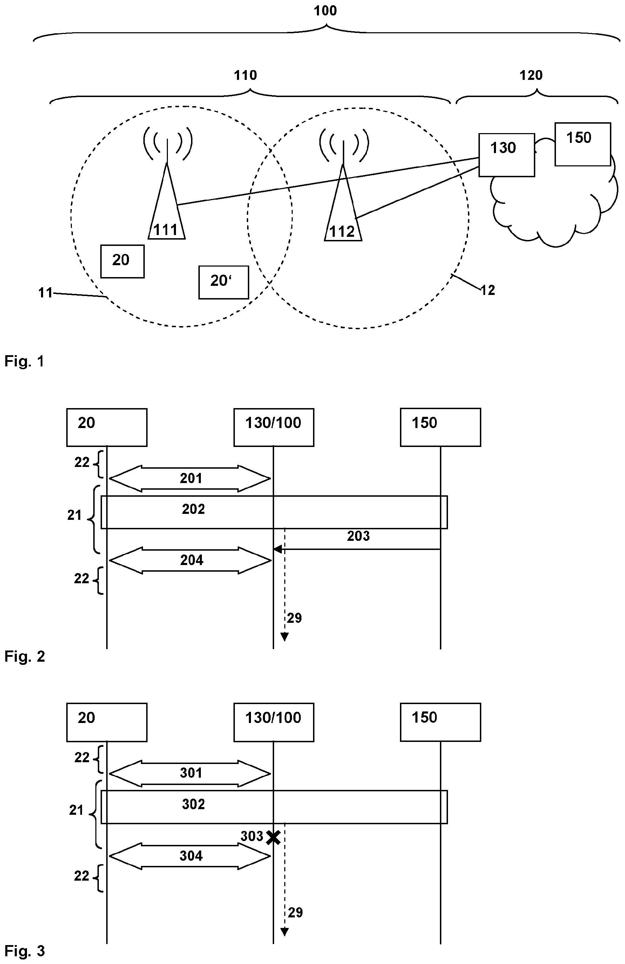

In Figure 1, an exemplary embodiment of a system and/or a mobile communication network 100 according to the present invention is schematically shown. The mobile communication network 100 comprises a plurality of user equipments, especially internet-of-things devices or machine type communication devices, that are, respectively, connected to the mobile communication network 100, wherein this plurality of user equipments or mobile client entities exemplarily comprises a first user equipment 20, and a second user equipment 20'. Typically and conventionally, the mobile communication network 100 comprises a (mobile) access network 110 or a radio access network 110 as well as a core network 120. The radio access network or (mobile) access network 110 is schematically and exemplarily shown as comprising two base station entities, schematically representing the radio access network, namely a first base station entity 111, and a second base station entity 112. The first base station entity 111 has or serves (or corresponds to) a first radio cell or radio coverage area indicated by means of a dashed circle and reference sign 11, whereas the second base station entity 112 has or serves (or corresponds to) a second radio cell or radio coverage area indicated by means of likewise a dashed circle and reference sign 12. The user equipments (i.e. the first and second user equipments 20, 20') use the mobile communication network 100 especially for the exchange of internet-of-things data and/or machine type communication data, typically measurement data of sensor elements within the user equipments 20, 20'. The core network (part) of the mobile communication network 100 is schematically shown as comprising a location server entity 150 as well as a specific network node 130 of a mobile communication network 100 being involved in performing positioning and/or location procedures with respect to the user equipment or user equipments 20, 20'.

According to the present invention, the inventive method, system, mobile communication network 100, and specific network node 130 of the mobile communication network 100 provide for an enhanced performance and/or efficiency in connection with performing a positioning or location procedure of the user equipment 20 by means providing the possibility - using the early release indicator - to indicate whether the early release of the user equipment's connection is preferred or not.

Figures 2 and 3 schematically illustrate communication diagrams between the user equipment 20, the mobile communication network 100 or its specific network node 130, and the location server entity 150, showing exemplary situations of an early release of the connection of the user equipment 20. In Figure 2, in a first processing step 201, the first connection state 21 is established. Prior to the first processing step 201, the user equipment 20 is in its second connection state 22. The user equipment 20 is required to be in the first connection state 21 (corresponding to a radio bearer or RRC context being established involving the user equipment 20) due to a positioning and/or location procedure - being performed in a second processing step 202 - being required to be performed (typically triggered by either the location server entity 150, or the specific network node 130 of the mobile communication network 100). Upon or after the end (or completion) of the positioning and/or location procedure (in the second processing step 202), the base station entity 111 normally would apply an inactivity timer 29, and release the connection of the user equipment 20 only after this inactivity timer has elapsed. According to the present invention, by means of a third processing step 203, an early release indicator (indicating that early release is preferred) is transmitted to the base station entity 111 serving the user equipment 20. This early release indicator (or flag) indicates in this situation that the established connection of the user equipment 20 shall be released after the positioning and/or location procedure being completed. Hence, in a fourth processing step 204, the connection is released, and the user equipment 20 returns to the second connection state 22 corresponding to a situation where the user equipment 20 lacks an active or activated radio bearer or RRC context. In Figure 3, in a first processing step 301, the first connection state 21 is established. Prior to the first processing step 301, the user equipment 20 is in its second connection state 22. The user equipment 20 is required to be in the first connection state 21 (corresponding to a radio bearer or RRC context being established involving the user equipment 20) due to a positioning and/or location procedure - being performed in a second processing step 302 - being required to be performed (typically triggered by either the location server entity 150, or the specific network node 130 of the mobile communication network 100). Upon or after the end (or completion) of the positioning and/or location procedure (in the second processing step 302), the base station entity 111 normally would apply the inactivity timer 29, and release the connection of the user equipment 20 only after this inactivity timer 29 has elapsed. According to the present invention, by means of a third processing step 303, an early release indicator (indicating that early release is preferred) is transmitted - by the mobile communication network 100, or by the specific network node 130 of the mobile communication network 100 - to the base station entity 111 serving the user equipment 20. This early release indicator (or flag) indicates in this situation that the established connection of the user equipment 20 shall be released after the positioning and/or location procedure being completed. Hence, in a fourth processing step 304, the connection is released, and the user equipment 20 returns to the second connection state 22 corresponding to a situation where the user equipment 20 lacks an active or activated radio bearer or RRC context.

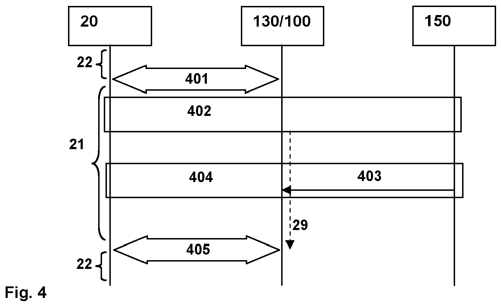

Figure 4 schematically illustrates a communication diagram between the user equipment 20, the mobile communication network 100 or the specific network node 130, and the location server entity 150, showing an exemplary situation of a deferred release of the connection of the user equipment 20. In Figure 4, in a first processing step 401, the first connection state 21 is established. Prior to the first processing step 401, the user equipment 20 is in its second connection state 22. The user equipment 20 is required to be in the first connection state 21 (corresponding to a radio bearer or RRC context being established involving the user equipment 20) due to a data transmission event between the user equipment 20 and the specific base station entity 111 - being performed in a second processing step 402 - being required to be performed (typically triggered by an application server entity (not represented in Figure 4) of an internet-of-things system relating to the user equipment 20). Upon or after the end (or completion) of the data transmission event (in the second processing step 402), the base station entity 111 applies the inactivity timer 29, and releases the connection of the user equipment 20 only after this inactivity timer 29 has elapsed. According to the present invention, by means of a third processing step 403, the early release indicator is transmitted - by the mobile communication network 100, or by the specific network node 130 of the mobile communication network 100 or by the location server entity 150 - to the base station entity 111 serving the user equipment 20, and, in a fourth processing step 404, a positioning and/or location procedure is performed. In Figure 4, it is schematically shown that the positioning and/or location procedure is initiated and completed during the time interval of the inactivity timer 29 not being completely elapsed. According to an embodiment of the present invention and in such a situation (i.e. with the inactivity timer 29 after a data transmission event not being elapsed), in case the early release indicator (or flag) indicates that an early release is preferred, the established connection of the user equipment 20 is maintained until the (original) inactivity timer 29 (i.e. having been started from the completion of the data transmission event) has elapsed, even though the early release indicator indicates that early release is preferred. Hence, in a fifth processing step 405 - after the inactivity timer has completely elapsed -, the connection is released, and the user equipment 20 returns to the second connection state 22 corresponding to a situation where the user equipment 20 lacks an active or activated radio bearer or RRC context. According to a variant of the situation represented in Figure 4 (but not shown in this Figure) - and especially in case that the early release indicator (transmitted in the third processing step 403) indicates that an early release is not preferred -, the inactivity timer 29 is reset (to its original value of, e.g., 20 or 30 seconds) after the end of the positioning and/or location procedure performed in the fourth processing step 404. This results in the user equipment staying longer in the first connection state 21.

Hence, the present invention focusses on an enhancement of existing 3GPP positioning mechanisms in order to minimize the energy consumption in (and especially after) a positioning measurement event (or positioning and/or location procedure). As maintaining a radio bearer regarding a user equipment 20 (i.e. being in the first connection state 21) consumes more energy than being in the second connection state 22, the time of the user equipment 20 being in the first connection state 21 should be minimized (or the second connection state 22 should, at least, not be maintained unnecessarily). This is primarily explained here with respect to a mobile communication network 100 according to the LTE standard, but it is valid also for other mobile communication networks 100 applying different connectivity states in order to manage user equipment activities and hence power consumption. According to the LTE standard, basically, two states are defined on radio bearer level: RRC_IDLE (i.e. the second connection state 22) and RRC_CONNECTED (first connection state 21). In the IDLE state, the user equipment 20 operates at a low power consumption level since it performs only a few tasks, e.g. periodic listening to the paging channel. In order to carry out active communication, the user equipment 20 needs to be in CONNECTED state, where it can send and receive data packets. In this CONNECTED state 22, the user equipment 20 consumes much more energy, even when no packets are transmitted or received. Normally, the user equipment 20 changes from IDLE 22 to CONNECTED 21 when data is to be transmitted, either initiated by the user equipment 20 or from the network side. To return to IDLE state 22, the network initiates a radio bearer connection release procedure. In special LPWA (Low Power Wide Area) deployments for internet-of-things devices or systems, this can happen at the end of a data transmission session, if the user equipment 20 doesn't expect to send or receive any more data in a while or when an inactivity timer at the network side (typically at the specific base station entity 111 serving the user equipment 20 elapses (typically, this timer is configured to, e.g., 15 seconds or to 20 seconds or to 25 seconds or to 30 seconds or to 35 seconds. Hence, in case of such an inactivity timer is running, the connection, i.e. the radio bearer, is maintained, although the connection is not used. This results in unnecessary power consumption at the user equipment 20. The shorter the activity period is compared to the timer duration, the more energy is wasted. However, a longer timer duration avoids so-called ping-pong effects between CONNECTED and IDLE states, when multiple packets are to be transmitted in a short time frame. This is relevant especially for periodic positioning updates or events or positioning and/or location procedures taking place in internet-of-things use cases. When the period until the next positioning update is longer than the inactivity timer a better overall performance can be achieved, when the system returns immediately to IDLE 22 after a positioning update or positioning and/or location procedure.

Conventionally, it is known that for network-based positioning, 3GPP has defined a positioning protocol between the mobile communication network 100 and the user equipment 20 in order to initiate positioning measurements by the user equipment 20. Thereby, the network side is able to calculate the location of the user equipment 20. A positioning and/or location procedure is performed using an established radio bearer connection; the location server entity 150 typically requests measurements from the user equipment 20; the user equipment 20 performs the requested measurements, and the user equipment 20 provides the measurements back to the location server entity 150. According to a conventionally known behavior after completion of such a positioning and/or location procedure, no further data are transmitted for positioning purposes via the established radio bearer; however, the user equipment 20 stays in the CONNECTED state 21 that requires device activity and, hence, a higher power consumption, until the inactivity timer has elapsed. Only then, the radio bearer is released and the user equipment 20 changes to IDLE state 22 with reduced power consumption. Since the duration of the location procedure is rather short compared to the duration of the typically applied inactivity timer, disproportionate energy is consumed by the user equipment 20 device.

Hence, the present invention focusses on the reduction of these unnecessary long durations of power consuming CONNECTED states 21 in case of positioning, i.e. in case of performing positioning and/or location procedures. According to the present invention, the radio bearer is released shortly after the necessary location procedure has been carried out. By this, the user equipment 20 can return early to the IDLE state 22 leading to reduced power consumption. Typically, in any case the network (mobile communication network 100) can decide when to release the radio bearer. For instance, even when the location procedures have been completed, the network may decide to maintain the radio bearer in case other services make use of it, e.g. ongoing user data connections. The same may be valid, when a subsequent positioning update is triggered in short time.

In case of an early release, the radio bearer connected (i.e. the first connection state 21) can be immediately released after a positioning update, at least from the point of view of the positioning procedures. This is especially preferred in case no subsequent positioning update is planned within the next short period, for instance as defined by the inactivity timer, cf. Figures 2 and 3: The Location Server 150 (cf. Figure 2) informs the network on the completion of the location procedure. By this, it indicates that no radio resources towards this user equipment 20 are further needed for positioning functions. The respective network element (e.g. the serving base station entity 111) decides on the release of the dedicated radio bearer. Hereby, the current resource demand towards the specific user equipment is considered. The respective network element triggers the given procedure to release the radio bearer. In case that network or specific elements of the network (specific network nodes 130) are aware of the end of the location procedure, it is possible to trigger the early release from the mobile communication network 100. In this case one or more network functions are directly involved in the location procedure (which differs from the case of Figure 2). On detection of the completion of the location procedure, the network may trigger the release of the radio bearer.

In cases where subsequent positioning requests are expected within a short time period an early release, is not preferred as it would probably result in a ping-pong effect between ACTIVE and IDLE states 21, 22 inducing dedicated RRC signaling. Hence a mechanism is required to select either an early release or a deferred release. One option according to the present invention is to indicate by an early release indicator or flag (e.g. DURATION_UNTIL_NEXT_POSITIOING_MEASURMENT) the anticipated time interval until the next positioning procedure will be carried out or the preference of the early release indicator flag. By this indication, the responsible positioning entity in the Location Server (or location server entity) 150 or in the mobile communication network 100 is able to decide, together with the RRC functionality in the network, whether to initiate a release of the radio bearer or not. E.g., in case that the time indication DURATION_UNTIL_NEXT_POSITIOING_MEASURMENT is shorter than the inactivity timer, the radio bearer needs not to be released early since a subsequent positioning measurement is expected within this time frame.

## Claims

1. Method for performance in connection with performing a positioning or location procedure of a user equipment (20) in a mobile communication network (100),
wherein the mobile communication network (100) comprises an access network (110) comprising a plurality of base station entities (111, 112), each having a radio coverage area,
wherein the user equipment (20), while being located in the radio coverage area of a specific base station entity (111) out of the plurality of base station entities (111, 112), is configured to be able to be in different connection states, the different connection states including a first connection state (21), and at least a second connection state (22), the first connection state (21) corresponding to a radio bearer or RRC context being established - in view of transmitting data to or from the user equipment (20) - between the user equipment (20) on the one hand, and the specific base station entity (111) on the other hand, and the second connection state (22) corresponding to a situation where the user equipment (20) lacks an active or activated radio bearer or RRC context,
wherein in case of inactivity- after a previous data transmission event between the user equipment (20) and the specific base station entity (111) during a period of time longer than or corresponding to an inactivity timer of the specific base station entity (111) - of the user equipment (20), detected by the specific base station entity (111), the specific base station entity (111) releases the connection by means of requesting the user equipment (20) to change from the first connection state (21) to the second connection state (22),
wherein the mobile communication network (100) comprises or is connected to a location server entity (150), wherein the location server entity (150) is involved in performing a positioning and/or location procedure in order to determine the position and/or location of the user equipment (20),
wherein the location server entity (150) and/or a specific network node (130) of the mobile communication network (100) transmits an early release indication to the specific base station entity (111), the early release indication indicating whether or not - upon or after the termination of the positioning and/or location procedure - an early release of the connection of the user equipment (20), whereby the user equipment (20) changes from the first connection state (21) to the second connection state (22), is preferred,
wherein the method comprises the following steps:
-- in a first step, the positioning and/or location procedure is performed, and
-- in a second step, subsequent to the first step,
-- the specific base station entity (111) releases the connection of the user equipment (20) by allowing or requesting a change of the user equipment (20) from the first connection state (21) to the second connection state (22), in case that prior to performing the positioning and/or location procedure, both the user equipment (20) was in the second connection state (22) and the early release indication indicates that an early release of the connection of the user equipment (20) is preferred, and
-- the specific base station entity (111) maintains the connection of the user equipment (20) by requesting the user equipment (20) to stay in the first connection state (21), in case that upon or after performing the positioning and/or location procedure, the inactivity timer of the specific base station entity (111) - after a previous data transmission event between the user equipment (20) and the specific base station entity (111) - has not elapsed, or in case that the early release indication indicates that no early release of the connection of the user equipment (20) is preferred.

2. Method according to claim 1, wherein the positioning and/or location procedure comprises, in a first sub-step, a location request message, and in a second sub-step, a location answer message, the location request message being transmitted, by the specific base station entity (111), to the user equipment (20), and the location answer message being transmitted, by the user equipment (20) to the specific base station entity (111) and/or to the location server entity (150) and/or to the specific network node (130), wherein between the first sub-step and the second sub-step, during a third sub-step, the user equipment (20) determines positioning and/or location-related data to be sent, as part of the location answer message to the specific base station entity (111) and/or to the location server entity (150) and/or to the specific network node (130).

3. Method according to any of the preceding claims, wherein -in the second step - the specific base station entity (111) releases the connection of the user equipment (20) by allowing or requesting a change of the user equipment (20) from the first connection state (21) to the second connection state (22), in case all of the following conditions are met:
-- prior to performing the positioning and/or location procedure, the inactivity timer of the specific base station entity (111) - after a previous data transmission event between the user equipment (20) and the specific base station entity (111) - has not elapsed, resulting in the user equipment (20) being in the first connection state (21) prior to performing the positioning and/or location procedure, and
-- upon or after performing the positioning and/or location procedure, the inactivity timer of the specific base station entity (111) - after a previous data transmission event between the user equipment (20) and the specific base station entity (111) - has elapsed, and
-- the early release indication indicates that an early release of the connection of the user equipment (20) is preferred.

4. Method according to any of the preceding claims, wherein -in the second step - the specific base station entity (111) maintains the connection of the user equipment (20) until the inactivity timer of the specific base station entity (111) - after the previous data transmission event between the user equipment (20) and the specific base station entity (111) - has elapsed.

5. Method according to any of the preceding claims, wherein - in the second step - the specific base station entity (111) maintains the connection of the user equipment (20) until the inactivity timer of the specific base station entity (111) - after performing the positioning and/or location procedure - has elapsed.

6. Method according to any of the preceding claims, wherein the early release indication indicates that an early release of the connection of the user equipment (20) is not preferred in case that a further positioning and/or location procedure is scheduled to occur within a short period of time after the positioning and/or location procedure.

7. Method according to any of the preceding claims, wherein the second connection state (22) corresponds to an idle mode of the user equipment (20) according to the LTE standard, long term evolution standard, or according to the 5G/NR standard, fifth generation/new radio standard, and/or to an inactive mode of the user equipment (20) according to the 5G/NR standard, fifth generation/new radio standard.

8. Method according to any of the preceding claims, wherein the user equipment (20) is an internet-of-things device and/or a machine type communication device.

9. Mobile communication network for performance in connection with performing a positioning or location procedure of a user equipment (20) in a mobile communication network (100), wherein the mobile communication network (100) comprises an access network (110) comprising a plurality of base station entities (111, 112), each having a radio coverage area,
wherein the user equipment (20), while being located in the radio coverage area of a specific base station entity (111) out of the plurality of base station entities (111, 112), is configured to be able to be in different connection states, the different connection states including a first connection state (21), and at least a second connection state (22), the first connection state (21) corresponding to a radio bearer or RRC context being established - in view of transmitting data to or from the user equipment (20) - between the user equipment (20) on the one hand, and the specific base station entity (111) on the other hand, and the second connection state (22) corresponding to a situation where the user equipment (20) lacks an active or activated radio bearer or RRC context,
wherein in case of inactivity- after a previous data transmission event between the user equipment (20) and the specific base station entity (111) during a period of time longer than or corresponding to an inactivity timer of the specific base station entity (111) - of the user equipment (20), detected by the specific base station entity (111), the specific base station entity (111) releases the connection by means of requesting the user equipment (20) to change from the first connection state (21) to the second connection state (22),
wherein the mobile communication network (100) comprises or is connected to a location server entity (150), wherein the location server entity (150) is involved in performing a positioning and/or location procedure in order to determine the position and/or location of the user equipment (20),
wherein the location server entity (150) and/or a specific network node (130) of the mobile communication network (100) transmits an early release indication to the specific base station entity (111), the early release indication indicating whether or not - upon or after the termination of the positioning and/or location procedure - an early release of the connection of the user equipment (20), whereby the user equipment (20) changes from the first connection state (21) to the second connection state (22), is preferred,
wherein the mobile communication network (100) is configured such that:
-- the positioning and/or location procedure is performed, and
-- the specific base station entity (111) releases the connection of the user equipment (20) by allowing or requesting a change of the user equipment (20) from the first connection state (21) to the second connection state (22), in case that prior to performing the positioning and/or location procedure, both the user equipment (20) was in the second connection state (22) and the early release indication indicates that an early release of the connection of the user equipment (20) is preferred, and
-- the specific base station entity (111) maintains the connection of the user equipment (20) by requesting the user equipment (20) to stay in the first connection state (21), in case that upon or after performing the positioning and/or location procedure, the inactivity timer of the specific base station entity (111) - after a previous data transmission event between the user equipment (20) and the specific base station entity (111) - has not elapsed, or in case that the early release indication indicates that no early release of the connection of the user equipment (20) is preferred.

10. Specific network node (130) of a mobile communication network (100) for performance in connection with performing a positioning or location procedure of a user equipment (20) in a mobile communication network (100), wherein the mobile communication network (100) comprises, besides the specific network node (130), an access network (110) comprising a plurality of base station entities (111, 112), each having a radio coverage area,
wherein the user equipment (20), while being located in the radio coverage area of a specific base station entity (111) out of the plurality of base station entities (111, 112), is configured to be able to be in different connection states, the different connection states including a first connection state (21), and at least a second connection state (22), the first connection state (21) corresponding to a radio bearer or RRC context being established - in view of transmitting data to or from the user equipment (20) - between the user equipment (20) on the one hand, and the specific base station entity (111) on the other hand, and the second connection state (22) corresponding to a situation where the user equipment (20) lacks an active or activated radio bearer or RRC context,
wherein in case of inactivity- after a previous data transmission event between the user equipment (20) and the specific base station entity (111) during a period of time longer than or corresponding to an inactivity timer of the specific base station entity (111) - of the user equipment (20), detected by the specific base station entity (111), the specific base station entity (111) releases the connection by means of requesting the user equipment (20) to change from the first connection state (21) to the second connection state (22),
wherein the mobile communication network (100) comprises or is connected to a location server entity (150), wherein the location server entity (150) is involved in performing a positioning and/or location procedure in order to determine the position and/or location of the user equipment (20),
wherein the specific network node (130) of the mobile communication network (100) is configured to transmit an early release indication to the specific base station entity (111), the early release indication indicating whether or not - upon or after the termination of the positioning and/or location procedure - an early release of the connection of the user equipment (20), whereby the user equipment (20) changes from the first connection state (21) to the second connection state (22), is preferred, wherein the specific network node (130) is configured such that:
-- the positioning and/or location procedure is performed, and
-- the specific base station entity (111) releases the connection of the user equipment (20) by allowing or requesting a change of the user equipment (20) from the first connection state (21) to the second connection state (22), in case that prior to performing the positioning and/or location procedure, both the user equipment (20) was in the second connection state (22) and the early release indication indicates that an early release of the connection of the user equipment (20) is preferred, and
-- the specific base station entity (111) maintains the connection of the user equipment (20) by requesting the user equipment (20) to stay in the first connection state (21), in case that upon or after performing the positioning and/or location procedure, the inactivity timer of the specific base station entity (111) - after a previous data transmission event between the user equipment (20) and the specific base station entity (111) - has not elapsed, or in case that the early release indication indicates that no early release of the connection of the user equipment (20) is preferred.

11. Computer program comprising a computer readable program code which, when executed on a computer or on a base station entity (111, 112) or on a specific network node (130) of a mobile communication network (100) or on a location server entity (150) or in part on a base station entity (111, 112) and/or in part on a specific network node (130) of a mobile communication network (100) and/or in part or on a location server entity (150), causes the base station entity (111, 112) and/or the specific network node (130) of the mobile communication network (100) and/or the location server entity (150) to perform a method according one of claims 1 to 8.

12. Computer program product for performance in connection with performing a positioning or location procedure of a user equipment (20) in a mobile communication network (100), the computer program product comprising a computer program stored on a storage medium, the computer program comprising program code which, when executed on a computer or on a base station entity (111, 112) or on a specific network node (130) of a mobile communication network (100) or on a location server entity (150) or in part on a base station entity (111, 112) and/or in part on a specific network node (130) of a mobile communication network (100) and/or in part or on a location server entity (150), causes the base station entity (111, 112) and/or the specific network node (130) of the mobile communication network (100) and/or the location server entity (150) to perform a method according to one of claims 1 to 8.

## Patentansprüche

1. Verfahren für ein Ausführen in Verbindung mit dem Ausführen eines Positionsbestimmungs- oder Ortungsvorgangs einer Benutzerausrüstung (20) in einem Mobilkommunikationsnetz (100), wobei das Mobilkommunikationsnetz (100) ein Zugangsnetz (110) umfasst, das mehrere Basisstationseinheiten (111, 112) umfasst, die jeweils einen Funkversorgungsbereich aufweisen,
wobei die Benutzerausrüstung (20), während sie sich im Funkversorgungsbereich einer spezifischen Basisstationsentität (111) von den mehreren Basisstationsentitäten (111, 112) befindet, dafür eingerichtet ist, sich in verschiedenen Verbindungszuständen befinden zu können, wobei die verschiedenen Verbindungszustände einen ersten Verbindungszustand (21) und mindestens einen zweiten Verbindungszustand (22) umfassen, wobei der erste Verbindungszustand (21) einem Funkträger- oder RRC-Kontext entspricht, der - im Hinblick auf das Übertragen von Daten zu oder von der Benutzerausrüstung (20) - zwischen der Benutzerausrüstung (20) einerseits und der spezifischen Basisstationseinheit (111) andererseits aufgebaut wird, und wobei der zweite Verbindungszustand (22) einer Situation entspricht, in der der Benutzerausrüstung (20) ein aktiver oder aktivierter Funkträger- oder RRC-Kontext fehlt,
wobei im Fall einer Inaktivität - nach einem vorangegangenen Datenübertragungsereignis zwischen der Benutzerausrüstung (20) und der spezifischen Basisstationsentität (111) während eines Zeitraums, der mindestens so lang wie ein Inaktivitäts-Timer der spezifischen Basisstationsentität (111) ist - der Benutzerausrüstung (20), die durch die spezifische Basisstationsentität (111) detektiert wird, die spezifische Basisstationsentität (111) die Verbindung aufhebt, indem sie die Benutzerausrüstung (20) auffordert, von dem ersten Verbindungszustand (21) in den zweiten Verbindungszustand (22) zu wechseln,
wobei das Mobilkommunikationsnetz (100) eine Standortserverentität (150) umfasst oder mit dieser verbunden ist, wobei die Standortserverentität (150) am Ausführen eines Positionsbestimmungs- und/oder Ortungsvorgangs beteiligt ist, um die Position und/oder den Standort der Benutzerausrüstung (20) zu bestimmen,
wobei die Standortserverentität (150) und/oder ein spezifischer Netzknoten (130) des Mobilkommunikationsnetzes (100) einen Frühaufhebungshinweis an die spezifische Basisstationsentität (111) senden, wobei der Frühaufhebungshinweis angibt, ob - bei oder nach der Beendigung des Positionsbestimmungs- und/oder Ortungsvorgangs
- eine frühe Aufhebung der Verbindung der Benutzerausrüstung (20), wodurch die Benutzerausrüstung (20) von dem ersten Verbindungszustand (21) in den zweiten Verbindungszustand (22) wechselt, bevorzugt ist oder nicht,
wobei das Verfahren die folgenden Schritte umfasst:
- in einem ersten Schritt wird der Positionsbestimmungs- und/oder Ortungsvorgang ausgeführt und
- in einem zweiten Schritt, im Anschluss an den ersten Schritt:
- hebt die spezifische Basisstationsentität (111) die Verbindung der Benutzerausrüstung (20) auf, indem sie einen Wechsel der Benutzerausrüstung (20) von dem ersten Verbindungszustand (21) in den zweiten Verbindungszustand (22) erlaubt oder verlangt, falls vor dem Ausführen des Positionsbestimmungs- und/oder Ortungsvorgangs sowohl die Benutzerausrüstung (20) in dem zweiten Verbindungszustand (22) war als auch der Frühaufhebungshinweis angibt, dass eine frühe Aufhebung der Verbindung der Benutzerausrüstung (20) bevorzugt ist, und
- erhält die spezifische Basisstationsentität (111) die Verbindung der Benutzerausrüstung (20) aufrecht, indem sie die Benutzerausrüstung (20) auffordert, in dem ersten Verbindungszustand (21) zu bleiben, falls bei oder nach dem Ausführen des Positionsbestimmungs- und/oder Ortungsvorgangs der Inaktivitäts-Timer der spezifischen Basisstationsentität (111) - nach einem vorherigen Datenübertragungsereignis zwischen der Benutzerausrüstung (20) und der spezifischen Basisstationsentität (111) - nicht abgelaufen ist oder falls der Frühaufhebungshinweis angibt, dass keine frühe Aufhebung der Verbindung der Benutzerausrüstung (20) bevorzugt ist.

2. Verfahren nach Anspruch 1, wobei der Positionsbestimmungs- und/oder Ortungsvorgang in einem ersten Teilschritt eine Standortanfragenachricht und in einem zweiten Teilschritt eine Standortantwortnachricht umfasst, wobei die Standortanfragenachricht durch die spezifische Basisstationsentität (111) an die Benutzerausrüstung (20) gesendet wird und die Standortantwortnachricht durch die Benutzerausrüstung (20) an die spezifische Basisstationsentität (111) und/oder an die Standortserverentität (150) und/oder an den spezifischen Netzknoten (130) gesendet wird, wobei zwischen dem ersten Teilschritt und dem zweiten Teilschritt während eines dritten Teilschrittes die Benutzerausrüstung (20) positionsbestimmungs- und/oder ortungsbezogene Daten bestimmt, die als Teil der Standortantwortnachricht an die spezifische Basisstationsentität (111) und/oder an die Standortserverentität (150) und/oder an den spezifischen Netzknoten (130) zu senden sind.

3. Verfahren nach einem der vorangehenden Ansprüche, wobei - in dem zweiten Schritt - die spezifische Basisstationsentität (111) die Verbindung der Benutzerausrüstung (20) aufhebt, indem sie einen Wechsel der Benutzerausrüstung (20) von dem ersten Verbindungszustand (21) in den zweiten Verbindungszustand (22) erlaubt oder verlangt, falls alle der folgenden Bedingungen erfüllt sind:
- vor dem Ausführen des Positionsbestimmungs- und/oder Ortungsvorgangs ist der Inaktivitäts-Timer der spezifischen Basisstationsentität (111) - nach einem vorangegangenen Datenübertragungsereignis zwischen der Benutzerausrüstung (20) und der spezifischen Basisstationsentität (111) - nicht abgelaufen, was dazu führt, dass sich die Benutzerausrüstung (20) vor dem Ausführen des Positionsbestimmungs- und/oder Ortungsvorgangs in dem ersten Verbindungszustand (21) befindet, und
- bei oder nach dem Ausführen des Positionsbestimmungs- und/oder Ortungsvorgangs ist der Inaktivitäts-Timer der spezifischen Basisstationsentität (111) - nach einem vorangegangenen Datenübertragungsereignis zwischen der Benutzerausrüstung (20) und der spezifischen Basisstationsentität (111) - abgelaufen, und
- der Frühaufhebungshinweis gibt an, dass ein frühes Aufheben der Verbindung der Benutzerausrüstung (20) bevorzugt ist.

4. Verfahren nach einem der vorangehenden Ansprüche, wobei - in dem zweiten Schritt - die spezifische Basisstationsentität (111) die Verbindung der Benutzerausrüstung (20) aufrechterhält, bis der Inaktivitäts-Timer der spezifischen Basisstationsentität (111) - nach dem vorangegangenen Datenübertragungsereignis zwischen der Benutzerausrüstung (20) und der spezifischen Basisstationsentität (111) - abgelaufen ist.

5. Verfahren nach einem der vorangehenden Ansprüche, wobei - in dem zweiten Schritt - die spezifische Basisstationsentität (111) die Verbindung der Benutzerausrüstung (20) aufrechterhält, bis der Inaktivitäts-Timer der spezifischen Basisstationsentität (111) - nach dem Ausführen des Positionsbestimmungs- und/oder Ortungsvorgangs - abgelaufen ist.

6. Verfahren nach einem der vorangehenden Ansprüche, wobei der Frühaufhebungshinweis angibt, dass eine frühe Aufhebung der Verbindung der Benutzerausrüstung (20) nicht bevorzugt ist, falls geplant ist, dass ein weiterer Positionsbestimmungs- und/oder Ortungsvorgang innerhalb eines kurzen Zeitraums nach dem Positionsbestimmungs- und/oder Ortungsvorgang stattfinden soll.

7. Verfahren nach einem der vorangehenden Ansprüche, wobei der zweite Verbindungszustand (22) einem Leerlaufmodus der Benutzerausrüstung (20) gemäß dem LTE-Standard (Long Term Evolution-Standard) oder gemäß dem 5G/NR-Standard (Fifth Generation/New Radio Standard) und/oder einem inaktiven Modus der Benutzerausrüstung (20) gemäß dem 5G/NR-Standard (Fifth Generation/New Radio Standard) entspricht.

8. Verfahren nach einem der vorangehenden Ansprüche, wobei die Benutzerausrüstung (20) eine Internet-of-Things-Vorrichtung und/oder eine Maschinenkommunikationsvorrichtung ist.

9. Mobilkommunikationsnetz für ein Ausführen in Verbindung mit dem Ausführen eines Positionsbestimmungs- oder Ortungsvorgangs einer Benutzerausrüstung (20) in einem Mobilkommunikationsnetz (100), wobei das Mobilkommunikationsnetz (100) ein Zugangsnetz (110) umfasst, das mehrere Basisstationseinheiten (111, 112) umfasst, die jeweils einen Funkversorgungsbereich aufweisen,
wobei die Benutzerausrüstung (20), während sie sich im Funkversorgungsbereich einer spezifischen Basisstationsentität (111) von den mehreren Basisstationsentitäten (111, 112) befindet, dafür eingerichtet ist, sich in verschiedenen Verbindungszuständen befinden zu können, wobei die verschiedenen Verbindungszustände einen ersten Verbindungszustand (21) und mindestens einen zweiten Verbindungszustand (22) umfassen, wobei der erste Verbindungszustand (21) einem Funkträger- oder RRC-Kontext entspricht, der - im Hinblick auf das Übertragen von Daten zu oder von der Benutzerausrüstung (20) - zwischen der Benutzerausrüstung (20) einerseits und der spezifischen Basisstationseinheit (111) andererseits aufgebaut wird, und wobei der zweite Verbindungszustand (22) einer Situation entspricht, in der der Benutzerausrüstung (20) ein aktiver oder aktivierter Funkträger- oder RRC-Kontext fehlt,
wobei im Fall einer Inaktivität - nach einem vorangegangenen Datenübertragungsereignis zwischen der Benutzerausrüstung (20) und der spezifischen Basisstationsentität (111) während eines Zeitraums, der mindestens so lang wie ein Inaktivitäts-Timer der spezifischen Basisstationsentität (111) ist - der Benutzerausrüstung (20), die durch die spezifische Basisstationsentität (111) detektiert wird, die spezifische Basisstationsentität (111) die Verbindung aufhebt, indem sie die Benutzerausrüstung (20) auffordert, von dem ersten Verbindungszustand (21) in den zweiten Verbindungszustand (22) zu wechseln,
wobei das Mobilkommunikationsnetz (100) eine Standortserverentität (150) umfasst oder mit dieser verbunden ist, wobei die Standortserverentität (150) am Ausführen eines Positionsbestimmungs- und/oder Ortungsvorgangs beteiligt ist, um die Position und/oder den Standort der Benutzerausrüstung (20) zu bestimmen,
wobei die Standortserverentität (150) und/oder ein spezifischer Netzknoten (130) des Mobilkommunikationsnetzes (100) einen Frühaufhebungshinweis an die spezifische Basisstationsentität (111) senden, wobei der Frühaufhebungshinweis angibt, ob - bei oder nach der Beendigung des Positionsbestimmungs- und/oder Ortungsvorgangs
- eine frühe Aufhebung der Verbindung der Benutzerausrüstung (20), wodurch die Benutzerausrüstung (20) von dem ersten Verbindungszustand (21) in den zweiten Verbindungszustand (22) wechselt, bevorzugt ist oder nicht,
wobei das Mobilkommunikationsnetz (100) so eingerichtet ist, dass:
- der Positionsbestimmungs- und/oder Ortungsvorgang ausgeführt wird und
- die spezifische Basisstationsentität (111) die Verbindung der Benutzerausrüstung (20) aufhebt, indem sie einen Wechsel der Benutzerausrüstung (20) von dem ersten Verbindungszustand (21) in den zweiten Verbindungszustand (22) erlaubt oder verlangt, falls vor dem Ausführen des Positionsbestimmungs- und/oder Ortungsvorgangs sowohl die Benutzerausrüstung (20) in dem zweiten Verbindungszustand (22) war als auch der Frühaufhebungshinweis angibt, dass eine frühe Aufhebung der Verbindung der Benutzerausrüstung (20) bevorzugt ist, und
- die spezifische Basisstationsentität (111) die Verbindung der Benutzerausrüstung (20) aufrechterhält, indem sie die Benutzerausrüstung (20) auffordert, in dem ersten Verbindungszustand (21) zu bleiben, falls bei oder nach dem Ausführen des Positionsbestimmungs- und/oder Ortungsvorgangs der Inaktivitäts-Timer der spezifischen Basisstationsentität (111) - nach einem vorherigen Datenübertragungsereignis zwischen der Benutzerausrüstung (20) und der spezifischen Basisstationsentität (111) - nicht abgelaufen ist oder falls der Frühaufhebungshinweis angibt, dass keine frühe Aufhebung der Verbindung der Benutzerausrüstung (20) bevorzugt ist.

10. Spezifischer Netzknoten (130) eines Mobilkommunikationsnetzes (100) für ein Ausführen in Verbindung mit dem Ausführen eines Positionsbestimmungs- oder Ortungsvorgangs einer Benutzerausrüstung (20) in einem Mobilkommunikationsnetz (100), wobei das Mobilkommunikationsnetz (100) neben dem spezifischen Netzknoten (130) ein Zugangsnetz (110) umfasst, das mehrere Basisstationseinheiten (111, 112) umfasst, die jeweils einen Funkversorgungsbereich aufweisen,
wobei die Benutzerausrüstung (20), während sie sich im Funkversorgungsbereich einer spezifischen Basisstationsentität (111) von den mehreren Basisstationsentitäten (111, 112) befindet, dafür eingerichtet ist, sich in verschiedenen Verbindungszuständen befinden zu können, wobei die verschiedenen Verbindungszustände einen ersten Verbindungszustand (21) und mindestens einen zweiten Verbindungszustand (22) umfassen, wobei der erste Verbindungszustand (21) einem Funkträger- oder RRC-Kontext entspricht, der - im Hinblick auf das Übertragen von Daten zu oder von der Benutzerausrüstung (20) - zwischen der Benutzerausrüstung (20) einerseits und der spezifischen Basisstationseinheit (111) andererseits aufgebaut wird, und wobei der zweite Verbindungszustand (22) einer Situation entspricht, in der der Benutzerausrüstung (20) ein aktiver oder aktivierter Funkträger- oder RRC-Kontext fehlt,
wobei im Fall einer Inaktivität - nach einem vorangegangenen Datenübertragungsereignis zwischen der Benutzerausrüstung (20) und der spezifischen Basisstationsentität (111) während eines Zeitraums, der mindestens so lang wie ein Inaktivitäts-Timer der spezifischen Basisstationsentität (111) ist - der Benutzerausrüstung (20), die durch die spezifische Basisstationsentität (111) detektiert wird, die spezifische Basisstationsentität (111) die Verbindung aufhebt, indem sie die Benutzerausrüstung (20) auffordert, von dem ersten Verbindungszustand (21) in den zweiten Verbindungszustand (22) zu wechseln,
wobei das Mobilkommunikationsnetz (100) eine Standortserverentität (150) umfasst oder mit dieser verbunden ist, wobei die Standortserverentität (150) am Ausführen eines Positionsbestimmungs- und/oder Ortungsvorgangs beteiligt ist, um die Position und/oder den Standort der Benutzerausrüstung (20) zu bestimmen,
wobei der spezifische Netzknoten (130) des Mobilkommunikationsnetzes (100) dafür eingerichtet ist, einen Frühaufhebungshinweis an die spezifische Basisstationsentität (111) zu senden, wobei der Frühaufhebungshinweis angibt, ob - bei oder nach der Beendigung des Positionsbestimmungs- und/oder Ortungsvorgangs - eine frühe Aufhebung der Verbindung der Benutzerausrüstung (20), wodurch die Benutzerausrüstung (20) von dem ersten Verbindungszustand (21) in den zweiten Verbindungszustand (22) wechselt, bevorzugt ist oder nicht, wobei der spezifische Netzknoten (130) so eingerichtet ist, dass:
- der Positionsbestimmungs- und/oder Ortungsvorgang ausgeführt wird und
- die spezifische Basisstationsentität (111) die Verbindung der Benutzerausrüstung (20) aufhebt, indem sie einen Wechsel der Benutzerausrüstung (20) von dem ersten Verbindungszustand (21) in den zweiten Verbindungszustand (22) erlaubt oder verlangt, falls vor dem Ausführen des Positionsbestimmungs- und/oder Ortungsvorgangs sowohl die Benutzerausrüstung (20) in dem zweiten Verbindungszustand (22) war als auch der Frühaufhebungshinweis angibt, dass eine frühe Aufhebung der Verbindung der Benutzerausrüstung (20) bevorzugt ist, und
- die spezifische Basisstationsentität (111) die Verbindung der Benutzerausrüstung (20) aufrechterhält, indem sie die Benutzerausrüstung (20) auffordert, in dem ersten Verbindungszustand (21) zu bleiben, falls bei oder nach dem Ausführen des Positionsbestimmungs- und/oder Ortungsvorgangs der Inaktivitäts-Timer der spezifischen Basisstationsentität (111) - nach einem vorherigen Datenübertragungsereignis zwischen der Benutzerausrüstung (20) und der spezifischen Basisstationsentität (111) - nicht abgelaufen ist oder falls der Frühaufhebungshinweis angibt, dass keine frühe Aufhebung der Verbindung der Benutzerausrüstung (20) bevorzugt ist.

11. Computerprogramm, umfassend einen computerlesbaren Programmcode, der, wenn er auf einem Computer oder auf einer Basisstationsentität (111, 112) oder auf einem spezifischen Netzknoten (130) eines Mobilkommunikationsnetzes (100) oder auf einer Standortserverentität (150) oder teilweise auf einer Basisstationsentität (111, 112) und/oder teilweise auf einem spezifischen Netzknoten (130) eines Mobilkommunikationsnetzes (100) und/oder teilweise auf einer Standortserverentität (150) ausgeführt wird, die Basisstationsentität (111, 112) und/oder den spezifischen Netzknoten (130) des Mobilkommunikationsnetzes (100) und/oder die Standortserverentität (150) veranlasst, ein Verfahren nach einem der Ansprüche 1 bis 8 auszuführen.

12. Computerprogrammprodukt für ein Ausführen in Verbindung mit dem Ausführen eines Positionsbestimmungs- oder Ortungsvorgangs einer Benutzerausrüstung (20) in einem Mobilkommunikationsnetz (100), wobei das Computerprogrammprodukt ein auf einem Speichermedium gespeichertes Computerprogramm umfasst, wobei das Computerprogramm Programmcode umfasst, der, wenn er auf einem Computer oder auf einer Basisstationseinheit (111, 112) oder auf einem spezifischen Netzknoten (130) eines Mobilkommunikationsnetzes (100) oder auf einer Standortserverentität (150) oder teilweise auf einer Basisstationsentität (111, 112) und/oder teilweise auf einem spezifischen Netzknoten (130) eines Mobilkommunikationsnetzes (100) und/oder teilweise oder auf einer Standortserverentität (150) ausgeführt wird, die Basisstationsentität (111, 112) und/oder den spezifischen Netzknoten (130) des Mobilkommunikationsnetzes (100) und/oder die Standortserverentität (150) veranlasst, ein Verfahren nach einem der Ansprüche 1 bis 8 auszuführen.

## Revendications

1. Procédé assurant une performance en relation avec l'exécution d'une procédure de positionnement ou de localisation d'un équipement d'utilisateur (20) dans un réseau de communication mobile (100), dans lequel le réseau de communication mobile (100) comprend un réseau d'accès (110) comprenant une pluralité d'entités stations de base (111, 112) ayant chacune une zone de couverture radioélectrique,
dans lequel l'équipement d'utilisateur (20), tandis qu'il se situe dans la zone de couverture radioélectrique d'une entité station de base spécifique (111) parmi la pluralité d'entités stations de base (111, 112), est configuré pour être apte à se trouver dans différents états de connexion, les différents états de connexion comprenant un premier état de connexion (21) et au moins un second état de connexion (22), le premier état de connexion (21) correspondant au fait qu'un support radio ou qu'un contexte de gestion RRC est établi - en vue de la transmission de données vers ou en provenance de l'équipement d'utilisateur (20) - entre l'équipement d'utilisateur (20) d'une part, et l'entité station de base spécifique (111) d'autre part, et le second état de connexion (22) correspondant à une situation où l'équipement d'utilisateur (20) ne dispose pas de support radio ou de contexte de gestion RRC actif ou activé,
dans lequel, en cas d'inactivité - après un précédent événement de transmission de données entre l'équipement d'utilisateur (20) et l'entité station de base spécifique (111) au cours d'une période de temps plus longue qu'un temporisateur d'inactivité de l'entité station de base spécifique (111) ou correspondant à celui-ci - de l'équipement d'utilisateur (20), détectée par l'entité station de base spécifique (111), l'entité station de base spécifique (111) libère la connexion en demandant à l'équipement d'utilisateur (20) de passer du premier état de connexion (21) au second état de connexion (22),
dans lequel le réseau de communication mobile (100) comprend ou est connecté à une entité serveur de localisation (150), dans lequel l'entité serveur de localisation (150) est impliquée dans l'exécution d'une procédure de positionnement et/ou de localisation afin de déterminer la position et/ou la localisation de l'équipement d'utilisateur (20),
dans lequel l'entité serveur de localisation (150) et/ou un nœud de réseau spécifique (130) du réseau de communication mobile (100) transmet(tent) une indication de libération anticipée à l'entité station de base spécifique (111), l'indication de libération anticipée indiquant si - à l'achèvement ou après l'achèvement de la procédure de positionnement et/ou de localisation - une libération anticipée de la connexion de l'équipement d'utilisateur (20), moyennant quoi l'équipement d'utilisateur (20) passe du premier état de connexion (21) au second état de connexion (22), est préférée ou non,
dans lequel le procédé comprend les étapes suivantes :
- dans une première étape, la procédure de positionnement et/ou de localisation est exécutée, et
- dans une seconde étape faisant suite à la première étape,
- l'entité station de base spécifique (111) libère la connexion de l'équipement d'utilisateur (20) en autorisant ou en demandant un passage de l'équipement d'utilisateur (20) du premier état de connexion (21) au second état de connexion (22), dans le cas où, avant d'exécuter la procédure de positionnement et/ou de localisation, l'équipement d'utilisateur (20) se trouvait dans le second état de connexion (22) et où l'indication de libération anticipée indique qu'une libération anticipée de la connexion de l'équipement d'utilisateur (20) est préférée, et
- l'entité station de base spécifique (111) maintient la connexion de l'équipement d'utilisateur (20) en demandant à l'équipement d'utilisateur (20) de rester dans le premier état de connexion (21), dans le cas où lors de l'exécution ou après l'exécution de la procédure de positionnement et/ou de localisation, le temporisateur d'inactivité de l'entité station de base spécifique (111) - après un précédent événement de transmission de données entre l'équipement d'utilisateur (20) et l'entité station de base spécifique (111) - n'a pas expiré, ou dans le cas où l'indication de libération anticipée indique qu'aucune libération anticipée de la connexion de l'équipement d'utilisateur (20) n'est préférée.

2. Procédé selon la revendication 1, dans lequel la procédure de positionnement et/ou de localisation comprend, dans une première sous-étape, un message de demande de localisation, et dans une deuxième sous-étape, un message de réponse de localisation, le message de demande de localisation étant transmis par l'entité station de base spécifique (111) à l'équipement d'utilisateur (20), et le message de réponse de localisation étant transmis par l'équipement d'utilisateur (20) à l'entité station de base spécifique (111) et/ou à l'entité serveur de localisation (150) et/ou au nœud de réseau spécifique (130), dans lequel entre la première sous-étape et la deuxième sous-étape, au cours d'une troisième sous-étape, l'équipement d'utilisateur (20) détermine des données relatives au positionnement et/ou à la localisation, à envoyer, en tant que partie du message de réponse de localisation, à l'entité station de base spécifique (111) et/ou à l'entité serveur de localisation (150) et/ou au nœud de réseau spécifique (130).

3. Procédé selon l'une quelconque des revendications précédentes, dans lequel - dans la seconde étape - l'entité station de base spécifique (111) libère la connexion de l'équipement d'utilisateur (20) en autorisant ou en demandant un passage de l'équipement d'utilisateur (20) du premier état de connexion (21) au second état de connexion (22), dans le cas où toutes les conditions suivantes sont réunies :
- avant l'exécution de la procédure de positionnement et/ou de localisation, le temporisateur d'inactivité de l'entité station de base spécifique (111) - après un précédent événement de transmission de données entre l'équipement d'utilisateur (20) et l'entité station de base spécifique (111) - n'a pas expiré, d'où il résulte que l'équipement d'utilisateur (20) se trouve dans le premier état de connexion (21) avant l'exécution de la procédure de positionnement et/ou de localisation, et
- lors de l'exécution ou après l'exécution de la procédure de positionnement et/ou de localisation, le temporisateur d'inactivité de l'entité station de base spécifique (111) - après un précédent événement de transmission de données entre l'équipement d'utilisateur (20) et l'entité station de base spécifique (111) - a expiré, et
- l'indication de libération anticipée indique qu'une libération anticipée de la connexion de l'équipement d'utilisateur (20) est préférée.

4. Procédé selon l'une quelconque des revendications précédentes, dans lequel - dans la seconde étape - l'entité station de base spécifique (111) maintient la connexion de l'équipement d'utilisateur (20) jusqu'à ce que le temporisateur d'inactivité de l'entité station de base spécifique (111) - après le précédent événement de transmission de données entre l'équipement d'utilisateur (20) et l'entité station de base spécifique (111) - ait expiré.

5. Procédé selon l'une quelconque des revendications précédentes, dans lequel - dans la seconde étape - l'entité station de base spécifique (111) maintient la connexion de l'équipement d'utilisateur (20) jusqu'à ce que le temporisateur d'inactivité de l'entité station de base spécifique (111) - après l'exécution de la procédure de positionnement et/ou de localisation - ait expiré.

6. Procédé selon l'une quelconque des revendications précédentes, dans lequel l'indication de libération anticipée indique qu'une libération anticipée de la connexion de l'équipement d'utilisateur (20) n'est pas préférée dans le cas où il est prévu qu'une autre procédure de positionnement et/ou de localisation doit se produire dans un court délai après la procédure de positionnement et/ou de localisation.

7. Procédé selon l'une quelconque des revendications précédentes, dans lequel le second état de connexion (22) correspond à un mode de repos de l'équipement d'utilisateur (20) selon la norme LTE, norme d'évolution à long terme (*long term évolution*)*,* ou selon la norme 5G/NR, norme de cinquième génération/nouvelle radio, et/ou à un mode inactif de l'équipement d'utilisateur (20) selon la norme 5G/NR, norme de cinquième génération/nouvelle radio.

8. Procédé selon l'une quelconque des revendications précédentes, dans lequel l'équipement d'utilisateur (20) est un dispositif de l'Internet des objets et/ou un dispositif de communication de type machine.

9. Réseau de communication mobile assurant une performance en relation avec l'exécution d'une procédure de positionnement ou de localisation d'un équipement d'utilisateur (20) dans un réseau de communication mobile (100), dans lequel le réseau de communication mobile (100) comprend un réseau d'accès (110) comprenant une pluralité d'entités stations de base (111, 112) ayant chacune une zone de couverture radioélectrique,
dans lequel l'équipement d'utilisateur (20), tandis qu'il se situe dans la zone de couverture radioélectrique d'une entité station de base spécifique (111) parmi la pluralité d'entités stations de base (111, 112), est configuré pour être apte à se trouver dans différents états de connexion, les différents états de connexion comprenant un premier état de connexion (21) et au moins un second état de connexion (22), le premier état de connexion (21) correspondant au fait qu'un support radio ou qu'un contexte de gestion RRC est établi - en vue de la transmission de données vers ou en provenance de l'équipement d'utilisateur (20) - entre l'équipement d'utilisateur (20) d'une part, et l'entité station de base spécifique (111) d'autre part, et le second état de connexion (22) correspondant à une situation où l'équipement d'utilisateur (20) ne dispose pas de support radio ou de contexte de gestion RRC actif ou activé,
dans lequel, en cas d'inactivité - après un précédent événement de transmission de données entre l'équipement d'utilisateur (20) et l'entité station de base spécifique (111) au cours d'une période de temps plus longue qu'un temporisateur d'inactivité de l'entité station de base spécifique (111) ou correspondant à celui-ci - de l'équipement d'utilisateur (20), détectée par l'entité station de base spécifique (111), l'entité station de base spécifique (111) libère la connexion en demandant à l'équipement d'utilisateur (20) de passer du premier état de connexion (21) au second état de connexion (22),
dans lequel le réseau de communication mobile (100) comprend ou est connecté à une entité serveur de localisation (150), dans lequel l'entité serveur de localisation (150) est impliquée dans l'exécution d'une procédure de positionnement et/ou de localisation afin de déterminer la position et/ou la localisation de l'équipement d'utilisateur (20),
dans lequel l'entité serveur de localisation (150) et/ou un nœud de réseau spécifique (130) du réseau de communication mobile (100) transmet(tent) une indication de libération anticipée à l'entité station de base spécifique (111), l'indication de libération anticipée indiquant si - à l'achèvement ou après l'achèvement de la procédure de positionnement et/ou de localisation - une libération anticipée de la connexion de l'équipement d'utilisateur (20), moyennant quoi l'équipement d'utilisateur (20) passe du premier état de connexion (21) au second état de connexion (22), est préférée ou non,
dans lequel le réseau de communication mobile (100) est configuré de telle sorte que :
- la procédure de positionnement et/ou de localisation soit exécutée, et
- l'entité station de base spécifique (111) libère la connexion de l'équipement d'utilisateur (20) en autorisant ou en demandant un passage de l'équipement d'utilisateur (20) du premier état de connexion (21) au second état de connexion (22), dans le cas où, avant d'exécuter la procédure de positionnement et/ou de localisation, l'équipement d'utilisateur (20) se trouvait dans le second état de connexion (22) et où l'indication de libération anticipée indique qu'une libération anticipée de la connexion de l'équipement d'utilisateur (20) est préférée, et
- l'entité station de base spécifique (111) maintienne la connexion de l'équipement d'utilisateur (20) en demandant à l'équipement d'utilisateur (20) de rester dans le premier état de connexion (21), dans le cas où lors de l'exécution ou après l'exécution de la procédure de positionnement et/ou de localisation, le temporisateur d'inactivité de l'entité station de base spécifique (111) - après un précédent événement de transmission de données entre l'équipement d'utilisateur (20) et l'entité station de base spécifique (111) - n'a pas expiré, ou dans le cas où l'indication de libération anticipée indique qu'aucune libération anticipée de la connexion de l'équipement d'utilisateur (20) n'est préférée.

10. Nœud de réseau spécifique (130) d'un réseau de communication mobile (100) assurant une performance en relation avec l'exécution d'une procédure de positionnement ou de localisation d'un équipement d'utilisateur (20) dans un réseau de communication mobile (100), dans lequel le réseau de communication mobile (100) comprend, outre le nœud de réseau spécifique (130), un réseau d'accès (110) comprenant une pluralité d'entités stations de base (111, 112) ayant chacune une zone de couverture radioélectrique,
dans lequel l'équipement d'utilisateur (20), tandis qu'il se situe dans la zone de couverture radioélectrique d'une entité station de base spécifique (111) parmi la pluralité d'entités stations de base (111, 112), est configuré pour être apte à se trouver dans différents états de connexion, les différents états de connexion comprenant un premier état de connexion (21) et au moins un second état de connexion (22), le premier état de connexion (21) correspondant au fait qu'un support radio ou qu'un contexte de gestion RRC est établi - en vue de la transmission de données vers ou en provenance de l'équipement d'utilisateur (20) - entre l'équipement d'utilisateur (20) d'une part, et l'entité station de base spécifique (111) d'autre part, et le second état de connexion (22) correspondant à une situation où l'équipement d'utilisateur (20) ne dispose pas de support radio ou de contexte de gestion RRC actif ou activé,
dans lequel, en cas d'inactivité - après un précédent événement de transmission de données entre l'équipement d'utilisateur (20) et l'entité station de base spécifique (111) au cours d'une période de temps plus longue qu'un temporisateur d'inactivité de l'entité station de base spécifique (111) ou correspondant à celui-ci - de l'équipement d'utilisateur (20), détectée par l'entité station de base spécifique (111), l'entité station de base spécifique (111) libère la connexion en demandant à l'équipement d'utilisateur (20) de passer du premier état de connexion (21) au second état de connexion (22),
dans lequel le réseau de communication mobile (100) comprend ou est connecté à une entité serveur de localisation (150), dans lequel l'entité serveur de localisation (150) est impliquée dans l'exécution d'une procédure de positionnement et/ou de localisation afin de déterminer la position et/ou la localisation de l'équipement d'utilisateur (20),
dans lequel le nœud de réseau spécifique (130) du réseau de communication mobile (100) est configuré pour transmettre une indication de libération anticipée à l'entité station de base spécifique (111), l'indication de libération anticipée indiquant si - à l'achèvement ou après l'achèvement de la procédure de positionnement et/ou de localisation - une libération anticipée de la connexion de l'équipement d'utilisateur (20), moyennant quoi l'équipement d'utilisateur (20) passe du premier état de connexion (21) au second état de connexion (22), est préférée ou non, dans lequel le nœud de réseau spécifique (130) est configuré de telle sorte que :
- la procédure de positionnement et/ou de localisation soit exécutée, et
- l'entité station de base spécifique (111) libère la connexion de l'équipement d'utilisateur (20) en autorisant ou en demandant un passage de l'équipement d'utilisateur (20) du premier état de connexion (21) au second état de connexion (22), dans le cas où, avant d'exécuter la procédure de positionnement et/ou de localisation, l'équipement d'utilisateur (20) se trouvait dans le second état de connexion (22) et où l'indication de libération anticipée indique qu'une libération anticipée de la connexion de l'équipement d'utilisateur (20) est préférée, et
- l'entité station de base spécifique (111) maintienne la connexion de l'équipement d'utilisateur (20) en demandant à l'équipement d'utilisateur (20) de rester dans le premier état de connexion (21), dans le cas où lors de l'exécution ou après l'exécution de la procédure de positionnement et/ou de localisation, le temporisateur d'inactivité de l'entité station de base spécifique (111) - après un précédent événement de transmission de données entre l'équipement d'utilisateur (20) et l'entité station de base spécifique (111) - n'a pas expiré, ou dans le cas où l'indication de libération anticipée indique qu'aucune libération anticipée de la connexion de l'équipement d'utilisateur (20) n'est préférée.

11. Programme informatique comprenant un code de programme lisible par ordinateur, qui, lorsqu'il est exécuté sur un ordinateur ou sur une entité station de base (111, 112) ou sur nœud de réseau spécifique (130) d'un réseau de communication mobile (100) ou sur une entité serveur de localisation (150) ou en partie sur une entité station de base (111, 112) et/ou en partie sur un nœud de réseau spécifique (130) d'un réseau de communication mobile (100) et/ou en partie sur une entité serveur de localisation (150), fait mettre en œuvre à l'entité station de base (111, 112) et/ou au nœud de réseau spécifique (130) du réseau de communication mobile (100) et/ou à l'entité serveur de localisation (150) un procédé selon l'une des revendications 1 à 8.

12. Produit-programme informatique assurant une performance en relation avec l'exécution d'une procédure de positionnement ou de localisation d'un équipement d'utilisateur (20) dans un réseau de communication mobile (100), le produit-programme informatique comprenant un programme informatique stocké sur un support de stockage, le programme informatique comprenant un code de programme qui, lorsqu'il est exécuté sur un ordinateur ou sur une entité station de base (111, 112) ou sur un nœud de réseau spécifique (130) d'un réseau de communication mobile (100) ou sur une entité serveur de localisation (150) ou en partie sur une entité station de base (111, 112) et/ou en partie sur un nœud de réseau spécifique (130) d'un réseau de communication mobile (100) et/ou en partie sur une entité serveur de localisation (150), fait mettre en œuvre à l'entité station de base (111, 112) et/ou au nœud de réseau spécifique (130) du réseau de communication mobile (100) et/ou à l'entité serveur de localisation (150) un procédé selon l'une des revendications 1 à 8.
